# EUROPÄISCHE PATENTANMELDUNG

(11) **EP 1 936 146 A2**
(43) Veröffentlichungstag der Anmeldung: **25.06.2008**
(21) Anmeldenummer: 07021067.9
(22) Anmeldetag: 27.10.2007
(51) Int. Cl.: F02B 27/02, F02D 41/22

(54) **Verfahren und Steuergerät zur Überprüfung einer Saugrohrlängenverstellung bei einem Verbrennungsmotor**

(30) Priorität: 23.12.2006 DE 102006061438
(71) Anmelder: Dr. Ing. h.c. F. Porsche Aktiengesellschaft, 71287 Weissach (DE)
(72) Erfinder: Rauner, Thomas, 89143 Blaubeuren (DE); Müller, Björn, 63674 Altenstadt (DE)

(57) **Zusammenfassung**

Vorgestellt wird ein Verfahren zur Überprüfung einer Saugrohrlängen- oder Volumenverstellung bei einem Verbrennungsmotor (10), der bei funktionsfähiger Saugrohrlängenverstellung bei einer ersten, vergleichsweise niedrigen Drehzahl mit einer ersten, vergleichsweise großen Saugrohrlänge (SRL_L) und bei einer zweiten, vergleichsweise hohen Drehzahl mit einer zweiten, vergleichsweise kleinen Saugrohrlänge (SRL_K) betrieben wird. Das Verfahren zeichnet sich dadurch aus, dass ein Maß (B) für einen Istwert der Leistung oder des Drehmoments des Verbrennungsmotors (10) aus im Betrieb des Verbrennungsmotors (10) für seine Steuerung erfassten Betriebsparametern gebildet wird, das Maß (B) mit einem vorbestimmten Sollwert verglichen wird, und die Überprüfung in Abhängigkeit vorn Ergebnis des Vergleichs erfolgt. Ferner wird ein zur Durchführung des Verfahrens eingerichtetes Steuergerät (42) vorgestellt.

## Beschreibung

Die Erfindung betrifft ein Verfahren zur Überprüfung einer Saugrohrlängenverstellung bei einem Verbrennungsmotor, der bei funktionsfähiger Saugrohrlängenverstellung bei einer ersten, vergleichsweise niedrigen Drehzahl mit einer ersten, vergleichsweise großen Saugrohrlänge und bei einer zweiten, vergleichsweise hohen Drehzahl mit einer zweiten, vergleichsweise kleinen Saugrohrlänge betrieben wird. Die Erfindung betrifft ferner ein Steuergerät mit den Merkmalen des unabhängigen Vorrichtungsanspruchs.

Die Saugrohrlängen- oder Volumenverstellung ist eine bekannte Maßnahme zur Verbesserung des Drehmomentverlaufs über der Drehzahl des Verbrennungsmotors und basiert auf dem folgenden Effekt: Durch Öffnen und Schließen der Einlassventile des Verbrennungsmotors wird die Säule aus Luft oder Kraftstoff/Luft-Gemisch, die sich vor jedem Einlassventil im Saugrohr befindet, zu Schwingungen angeregt. Bei passender Frequenz und Amplitude ergibt sich eine Verbesserung der Brennraumfüllung und damit eine Erhöhung des Drehmoments und der Leistung des Verbrennungsmotors.

Diese Verbesserung tritt innerhalb einer gewissen Bandbreite von Drehzahlen in der Nachbarschaft einer Resonanzdrehzahl auf, die mit der Masse der schwingenden Luftsäule und damit mit der Saugrohrlänge korreliert. Bei einer vergleichsweise niedrigen Drehzahl ergibt sich die verbesserte Füllung bei vergleichsweise großer Saugrohrlänge. Umgekehrt führen kurze Saugrohrlängen zu einer verbesserten Füllung bei vergleichsweise hohen Drehzahlen.

Mit der Saugrohrlängenverstellung wird die Saugrohrlänge an die Drehzahl angepasst, um die verbesserte Füllung sowohl bei niedrigen als auch bei hohen Drehzahlen zu erzielen.

Ergibt sich durch eine fehlerhafte Saugrohrlängenverstellung eine kurze Saugrohrlänge bei niedrigen Drehzahlen, so fällt das Drehmoment und die Leistung des Verbrennungsmotors dort geringer aus als bei optimaler Saugrohrlänge zu erwarten wäre. Analog ergibt sich ein Drehmomentverlust und ein Leistungsverlust bei hohen Drehzahlen, wenn dort aufgrund eines Fehlers eine große Saugrohrlänge besteht. Die genannten Verluste können eine Größenordnung von acht bis 10% erreichen.

Aus der DE 197 27 669 ist bereits ein Verfahren und ein Steuergerät zur Überprüfung einer Saugrohrlängenverstellung mit den Merkmalen der unabhängigen Ansprüche bekannt. Bei dem bekannten Gegenstand wird davon ausgegangen, dass eine defekte Saugrohrlängenverstellung die Abgasemissionen beeinflusst und deshalb durch gesetzlich vorgeschriebene On Board - Diagnoseverfahren erkannt werden muss. In diesem Zusammenhang sieht der bekannte Gegenstand vor, den Saugrohrdruck aus Werten der Drehzahl und des Luftmassenstroms des Verbrennungsmotors für zwei unterschiedliche Stellungen der Saugrohrklappe zu berechnen und simultan dazu mit einem Drucksensor zu erfassen. Zur Überprüfung der Saugrohrlängenverstellung werden Differenzen der berechneten und gemessenen Saugrohrdrücke bei den unterschiedlichen Saugrohrklappen-Stellungen gebildet und ausgewertet.

Obwohl sich gezeigt hat, dass die Forderungen des Gesetzgebers auch ohne eine On Board - Diagnose der Saugrohrlängenverstellung erfüllt werden können, ist es wünschenswert, die Saugrohrlängenverstellung überprüfen zu können. So kann es zum Beispiel vorkommen, dass sich die große Saugrohrlänge nicht einstellen lässt. In diesem Fall liefert der Verbrennungsmotor bei niedrigen bis mittleren Drehzahlen unter Volllast nur etwa 90% des Drehmoments, das er im fehlerfreien Zustand bereitstellen würde.

Im Gegensatz zu einem Leistungsmangel bei hohen Drehzahlen ist die Drehmomenteinbuße bei niedrigen bis mittleren Drehzahlen nicht ohne weiteres quantitativ feststellbar. Ein Leistungsmangel bei hohen Drehzahlen bildet sich zum Beispiel in einem Nachlassen der erreichbaren Höchstgeschwindigkeit ab und kann daher vom Fahrer mit der vorhandenen Instrumentierung im Prinzip objektiv festgestellt werden. Ein Leistungsmangel bei niedrigen bis mittleren Drehzahlen ist dagegen allein aus Geschwindigkeits- und/oder Drehzahl-Anzeigen nicht ohne weiteres erkennbar, hinterlässt aber doch unter Umständen den diffusen Eindruck, dass das Fahrzeug nicht optimal beschleunigt.

Bringt ein Fahrer das Fahrzeug mit diesem Eindruck in eine Werkstatt, so kann die Saugrohrlängenverstellung auch dort nur eingeschränkt überprüft werden, da die Verstellmechanik bei modernen Saugrohrmodulen häufig nicht mehr ohne Zerstörung des Saugrohrmoduls zugänglich ist.

Im Prinzip könnte man den aus der DE 197 27 669 bekannten Gegenstand zur Überprüfung der Saugrohrlängenverstellung verwenden. Der bekannte Gegenstand erfordert jedoch sowohl einen Luftmassenmesser als auch einen Saugrohrdrucksensor. Beide Sensoren eignen sich prinzipiell zur Erfassung der Last des Verbrennungsmotors. Unter der Last des Verbrennungsmotors wird in der Regel der Wert einer Brennraumfüllung nach einer Normierung auf eine maximale, unter Normbedingungen erzielbare Brennraumfüllung verstanden.

Unter dem Gesichtspunkt einer möglichst geringen Komplexität, möglichst geringen Kosten und einer maximalen Zuverlässigkeit der Steuerung des Verbrennungsmotors wird die parallele Verwendung mehrerer Lastsensoren prinzipiell als nachteilig betrachtet.

Vor diesem Hintergrund besteht die Aufgabe der Erfindung in der Angabe eines Verfahrens und eines Steuergeräts, das jeweils eine Überprüfung einer Saugrohrlängenverstellung mit einer weniger aufwändigen Sensorik erlaubt.

Diese Aufgabe wird bei einem Verfahren der eingangs genannten Art mit den kennzeichnenden Merkmalen des Anspruchs 1 und bei einem Steuergerät der eingangs genannten Art mit den kennzeichnenden Merkmalen des unabhängigen Vorrichtungsanspruchs gelöst.

Durch den Vergleich eines Istwertes der Leistung bzw. der durchgesetzten Luftmenge abhängig von Auaßentemperatur und geodätische Höhe oder des Drehmoments des Verbrennungsmotors mit einem vorbestimmten Sollwert kann ein Leistungs- oder Drehmomentverlust direkt aus dem Ergebnis des Vergleichs detektiert werden. Wird der Sollwert nicht erreicht, liegt ein Fehler vor. Dadurch, dass die Überprüfung der Saugrohrlängenverstellung in Abhängigkeit vom Ergebnis des Vergleichs erfolgt, wird ein erkannter Fehler einer defekten Saugrohrlängen- oder Volumenverstellung als wahrscheinliche Fehlerursache zugeordnet.

Dadurch, dass ein Maß für einen Istwert der Leistung oder des Drehmoments aus Betriebskenngrößen gebildet wird, die für eine Steuerung des Verbrennungsmotors sowieso erfasst werden, erfolgt eine Mehrfachnutzung dieser Betriebskenngrößen. Diese ermöglicht eine Überprüfung der Saugrohrlängenverstellung ohne zusätzlichen Sensor und damit insgesamt mit einer weniger aufwändigen Sensorik.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Saugrohr verstellbarer Länge oder Volumen; und
- Fig. 2: ein Flussdiagramm als Ausführungsbeispiel eines erfindungsgemäßen Verfahrens.

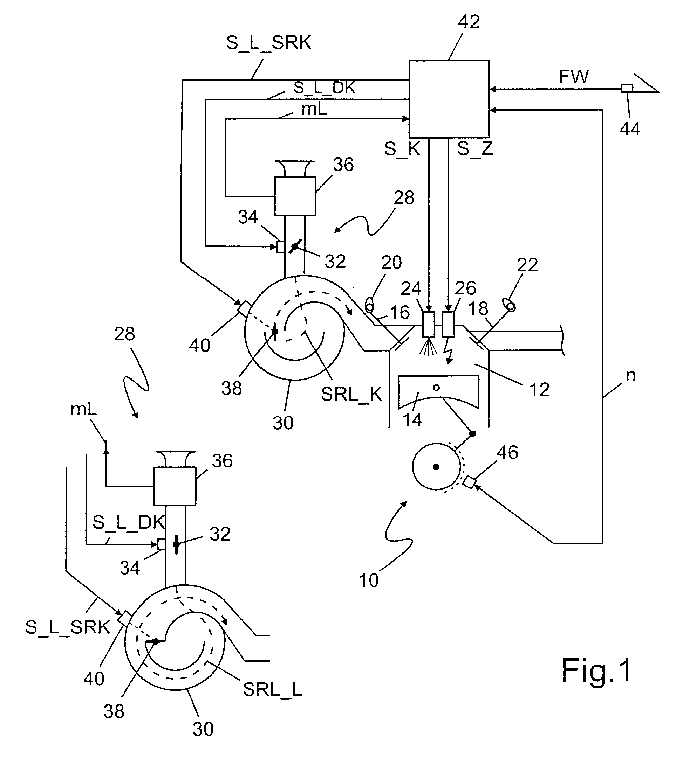

Im Einzelnen zeigt die Figur 1 einen Verbrennungsmotor 10 mit einem Brennraum 12, der von einem Kolben 14 beweglich abgedichtet wird. Ein Wechsel der Füllungen des Brennraums 12 wird durch wenigstens ein Einlassventil 16 und ein Auslassventil 18 gesteuert, die dazu von entsprechenden Aktoren 20, 22 betätigt werden. In der Ausgestaltung der Figur 1 dient ein Injektor 24 zur Dosierung von Kraftstoff in eine Luftfüllung des Brennraums 12. Das resultierende Gemisch aus Kraftstoff und Luft wird von einer Zündkerze 26 gezündet.

Die Füllung des Brennraums 12 mit Luft erfolgt aus einem Ansaugsystem 28, das ein Schaltsaugrohr 30 als Ausgestaltung einer Saugrohrlängenverstellung, eine Drosselklappe 32, die von einem Drosselklappen-Steller 34 betätigt wird, sowie einen Luftmassenmesser 36 aufweist. Das Schaltsaugrohr 30 weist eine Saugrohrklappe 38 auf, die von einem Saugrohrklappen-Steller 40 betätigt wird. In der Figur 1a ist die Saugrohrklappe 38 geöffnet. Als Folge ergibt sich die gestrichelt dargestellte kurze Saugrohrlänge SRL_K. Figur 1b zeigt die Saugrohrklappe 38 dagegen in einer geschlossenen Stellung, bei der sich die gestrichelt dargestellte lange Saugrohrlänge SRL_L ergibt.

Der Verbrennungsmotor 10 wird von einem Steuergerät 42 gesteuert, das dazu Signale verarbeitet, in denen sich verschiedene Betriebsparameter des Verbrennungsmotors 10 abbilden. In der Darstellung der Figur 1 sind das vor allem Signale mL des Luftmassenmessers 36, das Signal FW eines Fahrerwunschgebers 44, der eine Drehmomentanforderung des Fahrers erfasst, und das Signal n eines Drehzahlgebers 46, der eine Drehzahl n einer Kurbelwelle des Verbrennungsmotors 10 erfasst, sowie die geodätische Höhe über Null mit einem Umgebungsdrucksensor.

Es versteht sich, dass moderne Verbrennungsmotoren 10 mit einer Vielzahl weiterer Geber und/oder Sensoren ausgerüstet sind, die hier aus Gründen der Übersichtlichkeit nicht dargestellt sind. Beispiele solcher Sensoren sind Temperatursensoren, Drucksensoren, Abgassensoren, et cetera. Die Aufzählung der Geber 36,44 und 46 ist insofern nicht abschließend gemeint. Es muss auch nicht für jeden vom Steuergerät 42 verarbeiteten Betriebsparameter ein eigener Sensor vorhanden sein, weil das Steuergerät 42 verschiedene Betriebsparameter mithilfe von Rechenmodellen aus anderen, gemessenen Betriebsparametern modellieren kann.

Aus den empfangenen Gebersignalen bildet das Steuergerät 42 unter anderem Stellgrößen zur Einstellung des vom Verbrennungsmotor 10 zu erzeugenden Drehmoments. In der Ausgestaltung der Figur 1 sind dies insbesondere Stellgrößen S_K zur Ansteuerung des Injektors 24, S_Z zur Ansteuerung der Zündkerze 26, S_L_DK zur Ansteuerung des Drosselklappen-Stellers 34 und S_L_SRK zur Ansteuerung des Saugrohrklappen-Stellers 40.

Im Übrigen ist das Steuergerät 42 dazu eingerichtet, insbesondere dazu programmiert, das erfindungsgemäße Verfahren oder eine seiner Ausgestaltungen durchzuführen und/oder den entsprechenden Verfahrensablauf zu steuern.

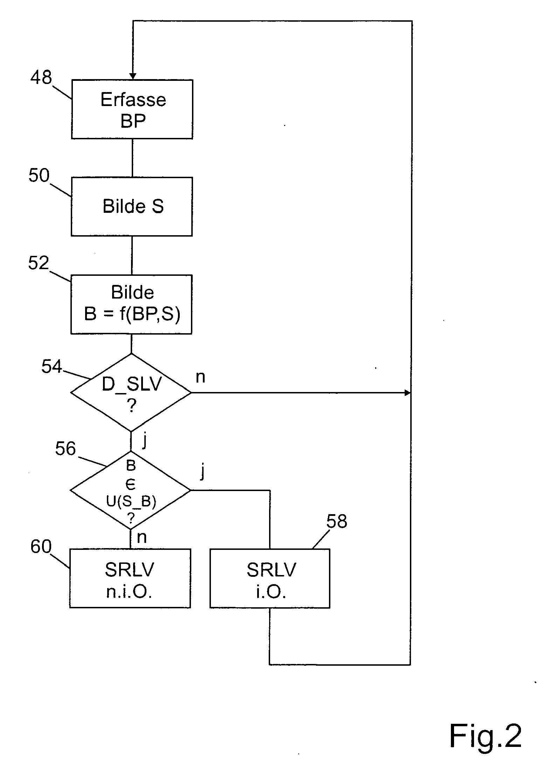

Fig. 2 zeigt ein Flussdiagramm als Ausführungsbeispiel eines erfindungsgemäßen Verfahrens, wie es vom Steuergerät 42 gesteuert wird. Dazu werden in einem Schritt 48 Betriebsparameter BP des Verbrennungsmotors 10 erfasst und zu Stellgrößen S zur Steuerung des Verbrennungsmotors 10 verarbeitet. Als Betriebsparameter BP werden vor allem die Signale mL des Luftmassenmessers 36, das Signal FW des Fahrerwunschgebers 44 und die vom Drehzahlgeber 46 gemessene Drehzahl n des Verbrennungsmotors 10 erfasst.

Als Stellgrößen S bildet das Steuergerät 42 insbesondere die im Zusammenhang mit der Figur 1 genannten Stellgrößen S_Z, S_K, S_L_DK und S_L_SRK. Dabei stellt das Steuergerät 42 bei funktionsfähiger Saugrohrlängenverstellung und einer ersten vergleichsweise niedrigen Drehzahl n1 eine erste, vergleichsweise große Saugrohrlänge SRL_L und bei einer zweiten, vergleichsweise hohen Drehzahl n2 eine zweite, vergleichsweise kleine Saugrohrlänge SRL_K ein. In einem Schritt 52 wird ein Maß B für einen Istwert der Leistung P oder des Drehmoments M des Verbrennungsmotors 10 aus im Betrieb des Verbrennungsmotors 10 für seine Steuerung erfassten Betriebsparametern BP gebildet.

Eine bevorzugte Ausgestaltung sieht vor, dass das Maß B in Abhängigkeit von einem Integral einer in den Verbrennungsmotor 10 strömenden Luftmenge und damit letztlich aus dem Signal mL des Luftmassenmessers 36 bestimmt wird. Bei steigendem Wert der in den Verbrennungsmotor 10 strömenden Luftmenge und konstantem Wirkungsgrad anderer Einflussgrößen wie der Zündung und der Gemischbildung, die über die Stellgrößen S_Z und S_K beeinflussbar sind, steigt das Drehmoment des Verbrennungsmotors 10 an. Durch die Integration werden schnelle Fluktuationen der als Momentanwert mL erfassten Luftmenge gedämpft. Daher bilden sich die Drehmomentwerte mit einer Genauigkeit im Wert des Integrals ab, die eine quantitative Bestimmung des Drehmoments M mit einer für den Zweck der Überprüfung ausreichenden Genauigkeit erlaubt.

Eine alternative Ausgestaltung sieht vor, dass das Maß B in Abhängigkeit von einem Integral eines modellierten Drehmomentsignals in dem Steuergerät 42 des Verbrennungsmotors 10 gebildet wird.

Moderne Motorsteuerungen koordinieren alle Drehmomentanforderungen an den Verbrennungsmotor 10 konsequent auf einer Momenten-Ebene, also auf der Basis von Drehmomentanforderungen und Einflüssen von Stellgrößen S_K, S_Z, S_L_DK, S_L_SRK auf das tatsächliche Drehmoment. Dabei wird unter anderem aus aktuellen Werten der Füllung, der Luftzahl Lambda, des Zündwinkels und der Drehzahl ein theoretisch optimales indiziertes Drehmoment des Verbrennungsmotors 10 gebildet. Aus den bei der Stellgrößen-Berechnung und -Ausgabe verwendeten Wirkungsgraden der Stelleingriffe ergibt sich daraus ein Istwert des vom Verbrennungsmotor 10 erzeugten Drehmoments M.

Diese Ausgestaltung nutzt das sowieso im Steuergerät 42 berechnete Momentenmodell für die Überprüfung aus und basiert auf der Erkenntnis, dass die Genauigkeit der an sich bekannten und für Steuerungszwecke verwendeten Momentenberechnung für den Zweck der Überprüfung ausreichend hoch ist.

Im Anschluss an die Bildung des Maßes B wird im Schritt 54 überprüft, ob eine Überprüfung D_SRLV der Saugrohrlängenverstellung SRLV durchgeführt werden soll. In diesem Zusammenhang sieht eine bevorzugte Ausgestaltung vor, dass das Verfahren in einem Volllastbetriebszustand des Verbrennungsmotors 10 durchgeführt wird. Dort arbeitet der Verbrennungsmotor 10 entdrosselt in einem mit hinreichender Genauigkeit reproduzierbar einstellbaren Betriebspunkt, was für die Zuverlässigkeit der Sollwertvorgabe und der Istwertberechnung und damit für die Zuverlässigkeit des Sollwert/Istwert-Vergleichs wichtig ist.

Entsprechend wird bei dieser Ausgestaltung im Schritt 54 überprüft, ob der Verbrennungsmotor 10 unter Volllast arbeitet. Dies ist zum Beispiel bei voll geöffneter Drosselklappe 32 der Fall. Alternativ oder ergänzend kann der Volllastbetriebszustand auch aus anderen Betriebsparametern BP wie dem Wert einer relativen Brennraumfüllung erkannt werden, die auf eine unter Normbedingungen maximal mögliche Brennraumfüllung normiert wurde. Alternativ oder ergänzend kann der Volllastbetriebszustand auch aus dem zur relativen Brennraumfüllung korrespondierenden Kraftstoffzumesssignal erkannt werden.

Eine weitere Ausgestaltung sieht vor, dass nur solche Maße verwertet werden, bei deren Bildung die Drehzahl n des Verbrennungsmotors 10 eine vorbestimmte Bandbreite von Drehzahlwerten durchlaufen hat. Es hat sich gezeigt, dass die damit verbundene Beschränkung der Überprüfung auf Beschleunigungsvorgänge die Zuverlässigkeit der erhaltenen Ergebnisse steigert. Entsprechend wird bei dieser Ausgestaltung im Schritt 54 überprüft, ob bei einer unter Volllast erfolgenden Beschleunigung die genannte Drehzahlbandbreite durchlaufen worden ist.

Sofern die Bedingungen für eine Überprüfung der Saugrohrlängenverstellung nicht vorliegen, wird die Abfrage im Schritt 54 verneint und das Programm verzweigt zurück zum Schritt 48, so dass die Schleife aus den Schritten 48 bis 54 wiederholt solange durchlaufen wird, bis im Schritt 54 erkannt wird, dass eine Überprüfung der Saugrohrlängenverstellung durchgeführt werden soll.

In diesem Fall wird im Schritt 56 überprüft, ob das im Schritt 52 gebildete Maß B für einen Istwert der Leistung oder des Drehmoments des Verbrennungsmotors 10 in einer Umgebung U um einen vorbestimmten Sollwert S_B liegt, der eine funktionsfähige Saugrohrlängenverstellung repräsentiert. Die Umgebung U lässt sich in einer Ausgestaltung als Intervall (S_B - dB; S_B + dB) definieren, wobei dB eine Größenordnung von drei bis 5% von S_B besitzen kann.

Die Abfrage im Schritt 56 stellt damit eine Ausgestaltung eines Sollwert-Istwert-Vergleichs dar. Sofern die Abfrage im Schritt 56 bejaht wird, entspricht der Istwert mit einer hinreichenden Genauigkeit dem Sollwert, so dass die Saugrohrlängenverstellung im Schritt 58 in Abhängigkeit vom Ergebnis des Vergleichs als funktionsfähig (i.O. = in Ordnung) beurteilt wird. Wird die Abfrage im Schritt 56 dagegen verneint, weicht der Istwert so stark von dem Sollwert ab, dass die Saugrohrlängenverstellung im Schritt 60 nicht als funktionsfähig (n.i.O. = nicht in Ordnung) beurteilt wird.

Im Rahmen einer weiteren Ausgestaltung wird ein erstes Maß für einen Istwert der Leistung oder des Drehmoments des Verbrennungsmotors bei einer vergleichsweise niedrigen Drehzahl gebildet und ein Fehler der Saugrohrlängenverstellung vermutet, wenn das erste Maß kleiner als ein für die vergleichsweise niedrige Drehzahl vorbestimmter erster Sollwert ist. Dabei gilt eine Drehzahl immer dann als niedrige Drehzahl, wenn sie unterhalb einer Umschalt-Drehzahl liegt, bei der eine funktionsfähige Saugrohrlängenverstellung das Saugrohr 30 zwischen der kleinen Saugrohrlänge SRL_K und der großen Saugrohrlänge SRL_L umschaltet. Ein typischer Wert für einen Ottomotor liegt bei Drehzahlen zwischen 2000 und 4000 U/min.

Bei dieser Ausgestaltung wird das Verfahren nach der Fig. 2 bei entsprechend niedrigen Drehzahlen ausgeführt. Wird dabei der Schritt 60 erreicht, wird im Steuergerät 42 eine Fehlervermutung gesetzt und gespeichert, die durch weitere Maßnahmen bestätigt oder widerlegt werden kann.

Diese Ausgestaltung berücksichtigt, dass die Zuverlässigkeit der Erkennung eines Fehlers der Saugrohrlängenverstellung bei niedrigen Drehzahlen geringer ist als bei höheren Drehzahlen. Dies liegt daran, dass die Werte der Luftmenge und des Drehmoments bei niedrigen Drehzahlen kleiner sind als bei höheren Drehzahlen.

Durch das Bilden einer Vermutung werden Abweichungen eines Istwertes von einem Sollwert registriert, führen aber erst dann zu einer eindeutigen Aussage, wenn die Vermutung durch weitere Maßnahmen entweder widerlegt oder bestätigt wird. Vorteilhaft ist auch, dass diese Ausgestaltung im normalen Fahrbetrieb vergleichsweise häufig durchgeführt werden kann, da Beschleunigungsvorgänge, die aus niedrigen Drehzahlen heraus erfolgen, häufig auftreten.

Tritt dann später bei gesetzter Vermutung im Fahrbetrieb eine Beschleunigung unter Volllast bei einer vergleichsweise hohen Drehzahl auf, wird das Verfahren nach der Fig. 2 in abgewandelter Form wiederholt. Die Abwandlung besteht darin, dass bei der vergleichsweise hohen Drehzahl versucht wird, eine lange Saugrohrlänge einzustellen. Mit anderen Worten: Das Steuergerät gibt eine Stellgröße S_L_SRK an den Saugrohrklappen-Steller 40 aus, mit der dieser bei funktionsfähiger Saugrohrlängenverstellung eine große Saugrohrlänge SRL_L einstellt.

Ferner bildet das Steuergerät 42 einen zweiten Sollwert oder Erwartungswert der Leistung P oder des Drehmoments M des Verbrennungsmotors 10 für die lange Saugrohrlänge SRL_L und die hohe Drehzahl. Da bei der hohen Drehzahl kurze Saugrohre zu größeren Füllungen führen als lange Saugrohre, wird der für lange Saugrohre gebildete Erwartungswert kleiner sein als ein für kurze Saugrohre gültiger Sollwert. Dann ermittelt das Steuergerät 42 ein zweites Maß für einen Istwert der Leistung P oder des Drehmoments M bei der vergleichsweise hohen Drehzahl. Wenn der so gebildete Istwert den für lange Saugrohre gebildeten Erwartungswert überschreitet, bestätigt das die Vermutung, dass sich die große Saugrohrlänge SRL_L nicht einstellen lässt. Im Steuergerät 42 wird dann eine entsprechende Fehlermeldung hinterlegt. In einer bevorzugten Ausgestaltung wird der Fehler so hinterlegt, dass er bei einem Werkstattbesuch ausgelesen werden kann, aber im normalen Fahrbetrieb nicht angezeigt wird.

Bei hohen Drehzahlen würde die Steuerung im normalen Fahrbetrieb eine kurze Saugrohrlänge SRL_K einstellen. Das bedeutet, dass sich der mögliche Fehler einer im Zustand mit kurzer Saugrohrlänge SRL_K klemmenden Saugrohrklappe 38 bei hohen Drehzahlen im Fahrbetrieb nicht bemerkbar macht. Durch den Versuch einer aktiven Verstellung der Saugrohrlänge zu einem längeren Wert SRL_L wird der genannte Fehler jedoch auch bei hohen Drehzahlen und damit hohen Werten der Luftmenge und des Drehmoments detektierbar.

Wenn die Einstellung einer langen Saugrohrlänge SRL_L funktioniert, tritt bei hohen Drehzahlen ein Drehmoment- und Leistungsverlust auf. Das ist im Prinzip unerwünscht, da solche Verluste das Beschleunigungsvermögen des Fahrzeugs kurzzeitig einschränken und den Fahrer damit irritieren können. Um diese Irritationen zu vermeiden, wird diese Ausgestaltung nur dann durchgeführt, wenn bei einer niedrigeren Drehzahl bereits vorher eine Fehlervermutung gesetzt worden ist. Das Durchführen der Ausgestaltung bei der hohen Drehzahl hat dann den Vorteil, dass die gesetzte Fehlervermutung entweder widerlegt oder bestätigt wird.

Ein weiterer Vorteil besteht darin, dass eine Bestätigung der Fehlervermutung bedeutet, dass sich die lange Saugrohrlänge nicht einstellen lässt. Dann kommt es auch nicht zu der genannten irritierenden Reaktion des Fahrzeugs. Dadurch, dass die Ausgestaltung nur bei gesetzter Fehlervermutung durchgeführt wird, wird sie mit großer Wahrscheinlichkeit nur dann durchgeführt, wenn tatsächlich ein Fehler vorliegt. Den Fahrer irritierende Reaktionen des Fahrzeugs, die sich aus einer aktiven Ansteuerung der Saugrohrlängenverstellung bei hohen Drehzahlen ergeben könnten, werden dadurch weitestgehend vermieden.

Eine weitere Ausgestaltung sieht vor, dass bei einer vergleichsweise hohen Drehzahl ein dritter Sollwert der Leistung oder des Drehmoments des Verbrennungsmotors für eine kurze Saugrohrlänge gebildet wird, ein drittes Maß für einen Istwert der Leistung oder des Drehmoments des Verbrennungsmotors bei der vergleichsweise hohen Drehzahl gebildet und mit dem dritten Sollwert verglichen wird und eine Fehlermeldung erzeugt wird, wenn das dritte Maß kleiner als der dritte Sollwert ist. Diese Ausgestaltung hat den Vorteil, eine Erkennung des Fehlers zu erlauben, bei dem sich die kurze Saugrohrlänge nicht einstellen lässt.

Mit Blick auf die Figur 1 wurde die Erfindung unter Bezug auf einen Verbrennungsmotor 10 beschrieben, der mit einer inneren Gemischbildung durch direkt in einen Brennraum 12 erfolgende Einspritzung und mit Fremdzündung arbeitet. Es wird aber darauf hingewiesen, dass die Erfindung nicht auf solche Verbrennungsmotoren 10 beschränkt ist, sondern auch in Verbindung mit Verbrennungsmotoren verwendet werden kann, die mit äußerer Gemischbildung (z.B. Saugrohr-Einspritzung) oder Selbstzündung arbeiten. Ferner ist eine Verwendung sowohl bei aufgeladenen als auch bei nicht aufgeladenen Verbrennungsmotoren denkbar. Ferner wurde die Erfindung mit Blick auf eine Saugrohrlängenverstellung erläutert, die mit einer Saugrohrklappe arbeitet. Es versteht sich aber, dass die Erfindung auch bei Saugrohrlängenverstellungen, die mit anderen Mechanismen, zum Beispiel mit nach Art eines Teleskops ausziehbaren und einschiebbaren Saugrohren arbeiten, verwendet werden kann.

## Patentansprüche

1. Verfahren zur Überprüfung einer Saugrohrlängen- oder Volumenverstellung bei einem Verbrennungsmotor (10), der bei funktionsfähiger Saugrohrlängenverstellung bei einer ersten, vergleichsweise niedrigen Drehzahl mit einer ersten, vergleichsweise großen Saugrohrlänge (SRL_L) und bei einer zweiten, vergleichsweise hohen Drehzahl mit einer zweiten, vergleichsweise kleinen Saugrohrlänge (SRL_K) betrieben wird, **dadurch gekennzeichnet, dass** ein Maß (B) für einen Istwert der Leistung oder des Drehmoments des Verbrennungsmotors (10) aus im Betrieb des Verbrennungsmotors (10) für seine Steuerung erfassten Betriebsparametern gebildet wird, das Maß (B) mit einem vorbestimmten Sollwert verglichen wird, und die Überprüfung in Abhängigkeit vom Ergebnis des Vergleichs erfolgt.

2. Verfahren nach Anspruch 1, **dadurch gekennzeichnet, dass** das Maß (B) in Abhängigkeit vom Integral einer in den Verbrennungsmotor (10) strömenden Luftmenge bestimmt wird.

3. Verfahren nach Anspruch 1, **dadurch gekennzeichnet, dass** das Maß (B) in Abhängigkeit von einem Integral eines in einem Steuergerät (42) des Verbrennungsmotors (10) gebildeten Drehmomentsignals gebildet wird.

4. Verfahren nach einem der vorhergehenden Ansprüche, **dadurch gekennzeichnet, dass** es in einem Volllastbetriebszustand des Verbrennungsmotors (10) durchgeführt wird.

5. Verfahren nach Anspruch 4, **dadurch gekennzeichnet, dass** nur solche Maße (B) verwertet werden, bei deren Bildung die Drehzahl des Verbrennungsmotors (10) eine vorbestimmte Bandbreite von Drehzahlwerten durchlaufen hat.

6. Verfahren nach einem der vorhergehenden Ansprüche, **dadurch gekennzeichnet, dass** ein erstes Maß (B) für einen Istwert der Leistung oder des Drehmoments des Verbrennungsmotors (10) bei einer vergleichsweise niedrigen Drehzahl gebildet wird und dass ein Fehler der Saugrohrlängenverstellung vermutet wird, wenn das erste Maß kleiner als ein für die vergleichsweise niedrige Drehzahl vorbestimmter erster Sollwert ist.

7. Verfahren nach Anspruch 6, **dadurch gekennzeichnet, dass** bei einer vergleichsweise hohen Drehzahl versucht wird, eine lange Saugrohrlänge (SRL_L) einzustellen, ein zweiter Sollwert der Leistung oder des Drehmoments des Verbrennungsmotors für eine lange Saugrohrlänge (SRL_L) gebildet wird, ein zweites Maß für einen Istwert der Leistung oder des Drehmoments bei der vergleichsweise hohen Drehzahl gebildet wird und die Fehlervermutung bestätigt wird, wenn das zweite Maß größer als der vorbestimmte zweite Sollwert ist.

8. Verfahren nach einem der Ansprüche 1 bis 5, **dadurch gekennzeichnet, dass** bei einer vergleichsweise hohen Drehzahl ein dritter Sollwert der Leistung oder des Drehmoments des Verbrennungsmotors (10) für eine kurze Saugrohrlänge gebildet wird, ein drittes Maß (B) für einen Istwert der Leistung oder des Drehmoments des Verbrennungsmotors (10) bei der vergleichsweise hohen Drehzahl gebildet und mit dem dritten Sollwert verglichen wird und eine Fehlermeldung erzeugt wird, wenn das dritte Maß kleiner als der dritte Sollwert ist.

9. Steuergerät (42), das dazu eingerichtet ist, eine Saugrohrlängenverstellung bei einem Verbrennungsmotor (10) zu überprüfen, der bei funktionsfähiger Saugrohrlängenverstellung bei einer ersten, vergleichsweise niedrigen Drehzahl mit einer ersten, vergleichsweise großen Saugrohrlänge (SRL_L) und bei einer zweiten, vergleichsweise hohen Drehzahl mit einer zweiten, vergleichsweise kleinen Saugrohrlänge (SRL_K) betrieben wird, **dadurch gekennzeichnet, dass** das Steuergerät (42) dazu eingerichtet ist, ein Maß (B) für einen Istwert der Leistung oder des Drehmoments des Verbrennungsmotors (10) aus im Betrieb des Verbrennungsmotors (10) für seine Steuerung erfassten Betriebsparametern zu bilden, mit einem vorbestimmten Sollwert zu vergleichen, und die Saugrohrlängenverstellung in Abhängigkeit vom Ergebnis des Vergleichs zu überprüfen.

10. Steuergerät (42) nach Anspruch 9, **dadurch gekennzeichnet, dass** es dazu eingerichtet ist, einen Ablauf eines Verfahrens nach einem der Ansprüche 2 bis 8 zu steuern.
